# EUROPEAN PATENT APPLICATION

(11) **EP 2 848 666 A1**
(43) Date of publication of application: **18.03.2015**
(21) Application number: 14184678.2
(22) Date of filing: 12.09.2014
(51) Int. Cl.: C09K 8/62, C09K 8/68, C09K 8/80, C04B 28/02, C09K 8/467

(54) **Well treatment fluids and methods utilizing nano-particles**

(30) Priority: 12.09.2013 US 201314025638
(71) Applicant: Halliburton Energy Services, Inc., Houston, TX 77072 (US)
(72) Inventor: Roddy, Craig, Wayne, Duncan, OK Oklahoma 73533 (US); Chattrerij, Jiten, Duncan, OK Oklahoma 73533 (US); Cromwell, Roger, Stanley, Walters, OK Oklahoma 73572 (US)
(74) Representative: King, Lawrence

(57) **Abstract**

Well treatment fluids and methods that utilize nano-particles. Exemplary nano-particles are selected from the group consisting of particulate nano-silica, nano-alumina, nano-zinc oxide, nano-boron, nano-iron oxide, and combinations thereof. Embodiments also relate to methods of cementing that include the use of nano-particles. An exemplary method of cementing comprises introducing a cement composition into a subterranean formation, wherein the cement composition comprises cement, water and a particulate nano-silica. Embodiments also relate to use of nano-particles in drilling fluids, completion fluids, simulation fluids, fracturing fluids and well clean-up fluids.

## Description

### BACKGROUND

The present invention relates to well treatment compositions and methods utilizing nano-particles and, more particularly, to well cement compositions, fracturing fluids and methods utilizing particulate nano-silica.

In general, well treatments include a wide variety of methods that may be performed in oil, gas, geothermal and/or water wells, such as drilling, completion and workover methods. The drilling, completion and workover methods may include, but are not limited to, drilling, cementing, logging, perforating, fracturing, acidizing, gravel packing, and conformance methods. Many of these well treatments are designed to enhance and/or facilitate the recovery of desirable fluids from a subterranean well.

In cementing methods, such as well construction and remedial cementing, well cement compositions are commonly utilized. For example, in subterranean well construction, a pipe string (e.g., casing and liners) may be run into a well bore and cemented in place using a cement composition. The process of cementing the pipe string in place is commonly referred to as "primary cementing." In a typical primary cementing method, a cement composition may be pumped into an annulus between the walls of the well bore and the exterior surface of the pipe string disposed therein. The cement composition sets in the annular space, thereby forming an annular sheath of hardened, substantially impermeable cement that supports and positions the pipe string in the well bore and bonds the exterior surface of the pipe string to the subterranean formation. Among other things, the annular sheath of set cement surrounding the pipe string functions to prevent the migration of fluids in the annulus, as well as protecting the pipe string from corrosion. Cement compositions also may be used in remedial cementing methods, such as squeeze cementing and the placement of cement plugs.

In operation, the annular sheath of cement formed between the well bore and the pipe string often suffers structural failure due to pipe movements which cause shear stresses to be exerted on the set cement. Such stress conditions are commonly the result of relatively high fluid pressures and/or temperatures inside the cemented pipe string during testing, perforating, fluid injection or fluid production. For example, such stress may occur in wells subjected to steam recovery or production of hot formation fluids from high-temperature formations. The high-internal pipe pressure and/or temperature can result in the expansion of the pipe string, both radially and longitudinally, which places stresses on the cement sheath causing the cement bond between the exterior surfaces of the pipe or the well bore walls, or both, to fail and thus allow leakage of formation fluids and so forth. Accordingly, it may be desirable for the cement composition utilized for cementing pipe strings in the well bores to develop high strength after setting and to have sufficient resiliency (e.g., elasticity and ductility) to resist loss of the cement bond between the exterior surfaces of the pipe or the well bore walls, or both. Also, it may be desirable for the cement composition to be able to resist cracking and/or shattering that may result from other forces on the cement sheath. For example, it may be desirable for the cement sheath to include structural characteristics that protect its structural integrity from forces associated with formation shifting, overburden pressure, subsidence, tectonic creep, pipe movements, impacts and shocks subsequently generated by drilling and other well operations.
In addition to including components that improve mechanical properties of the cement, in a number of cementing methods, it may also be desirable to include one or more set accelerators in the well cement compositions to counteract certain constituents and/or environmental characteristics that excessively slow set times. For example, among other things, low temperatures and cement additives (e.g., fluid loss control additives and dispersants) can cause or contribute to an excessive set time for a cement composition. Accordingly, in certain situations, it may be desirable to reduce the set time by including a set accelerator in the cement composition. That is, the set accelerator may be included in a cement composition to counteract components of the cement composition or conditions surrounding the cement composition that are causing an excessive set time.

### BRIEF DESCRIPTION OF THE DRAWINGS

These drawings illustrate certain aspects of some of the embodiments of the present method, and should not be used to limit or define the method.

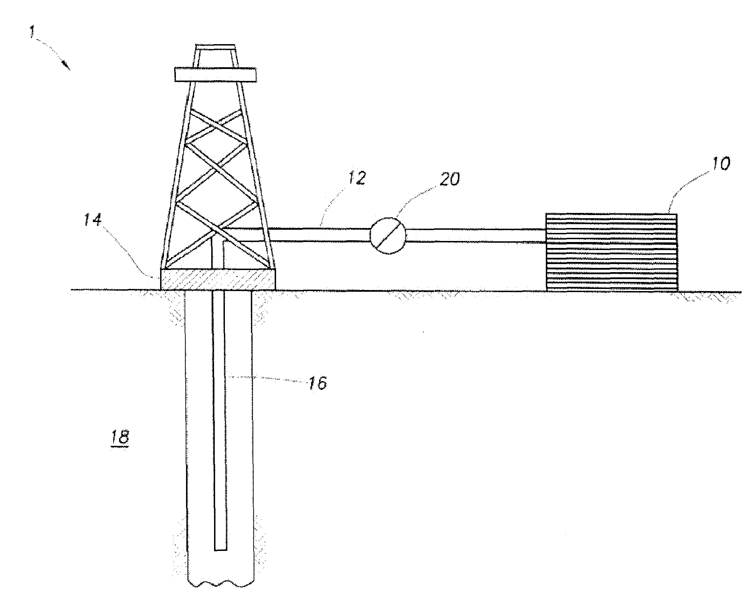

The FIGURE depicts an example of a system for delivering treatment fluids.

### SUMMARY OF INVENTION

The present invention provides a method of treating a subterranean formation comprising: introducing into the subterranean formation a treatment fluid at or above a pressure sufficient to create or enhance one or more fractures in the subterranean formation wherein at least a portion of the treatment fluid contains a proppant comprising nano-particulates; and depositing at least a portion of the nano-particulates in the one or more fractures, wherein the fractures are prevented from fully closing upon the release of pressure.

The present invention also provides a fracturing fluid comprising a nano-sized proppant.

The present invention also provides a method of treating a subterranean formation comprising: introducing into the subterranean formation a treatment fluid comprising particulate materials, the particulate materials comprising a particulate having a particle size of less than or equal to about 100 nm; and determining a packing volume fraction for the particulate materials in the treatment fluid.

### DESCRIPTION

The present invention relates to well treatment compositions and methods utilizing nano-particles and, more particularly, to well cement compositions, fracturing fluids and methods utilizing particulate nano-silica.

The cement compositions may comprise cement, water and particulate nano-silica. Those of ordinary skill in the art will appreciate that the exemplary cement compositions generally should have a density suitable for a particular application. By way of example, the cement composition may have a density in the range of from about 4 pounds per gallon ("ppg") to about 20 ppg. Preferably, the cement compositions may have a density in the range of from about 8 ppg to about 17 ppg. The cement compositions may be foamed or unfoamed or may comprise other means to reduce their densities, such as hollow microspheres, low-density elastic beads, or other density-reducing additives known in the art. Those of ordinary skill in the art, with the benefit of this disclosure, will recognize the appropriate density for a particular application.

The cement compositions may comprise a cement. Any of a variety of cements suitable for use in subterranean cementing operations may be used. Suitable examples include hydraulic cements that comprise calcium, aluminum, silicon, oxygen and/or sulfur, which set and harden by reaction with water. Such hydraulic cements, include, but are not limited to, Portland cements, pozzolana cements, gypsum cements, high-alumina-content cements, slag cements, silica cements and combinations thereof. The hydraulic cement may comprise a Portland cement. The Portland cements that may be suited for use are classified as Class A, C, H and G cements according to American Petroleum Institute, API Specification for Materials and Testing for Well Cements, API Specification 10, Fifth Ed., July 1, 1990.

The water used in the cement compositions may be freshwater or saltwater (e.g., water containing one or more salts dissolved therein, seawater, brines, saturated saltwater, etc.). In general, the water may be present in an amount sufficient to form a pumpable slurry. The water may be present in the cement compositions in an amount in the range of from about 33% to about 200% by weight of the cement on a dry basis ("bwoc"). The water may be present in an amount in the range of from about 35% to about 70% bwoc.

In addition, preferably the cement compositions may comprise nano-silica. The nano-silica may be described as particulate nano-silica. That is, the nano-silica may be particulate in nature and not, for example, a colloidal silica or a suspension of silica in solution. Indeed, the particulate nano-silica may be added to the cement composition as a dry nano-silica powder. Generally, the particulate nano-silica may be defined as nano-silica having a particle size (preferably diameter) of less than or equal to about 100 nm. For example, the particulate nano-silica may have a particle size in the range of from about 1 nm to about 100 nm (about 1×10⁻⁹ m to about 100×10⁻⁹ m). Preferably, the particulate nano-silica may have a particle size of less than or equal to about 50 nm. For example, the particulate nano-silica may have a particle size in the range of from about 5 nm to about 50 nm. Further, the particulate nano-silica may have a particle size of less than or equal to about 30 nm. For example, the particulate nano-silica may have a particle size in the range of from about 5 nm to about 30 nm. However, it should be noted that the particulate nano-silica may be utilized in combination with differently sized silica particles. For example, a number of silica particles with particle sizes greater than 100 nm may be included in a cement composition. References herein to "particle size" preferably refer to a number average particle size d₅₀. Alternatively, references herein to "particle size" may refer to a number particle size d₉₀.

It is now recognized that the particulate nano-silica, which may include silicon dioxide, may have an impact on certain physical characteristics of resulting cements. For example, relative to inclusion of colloidal silica or larger silica particles in a cement slurry, inclusion of particulate nano-silica in the cement slurry may provide improved mechanical properties, such as compressive strength, tensile strength, Young's modulus and Poisson's ratio. In addition, the particulate nano-silica also may be included in the cement composition as a set accelerator to accelerate the set time of the resultant cement composition. Accordingly, a cement composition may comprise a sufficient amount of particulate nano-silica to provide the desired characteristics in a resulting cement. Preferably, the particulate nano-silica may be present in the cement composition in an amount in the range of from about 1% to about 25% bwoc. Preferably, the particulate nano-silica may be present in the cement composition in an amount in the range of from about 5% to about 15% bwoc.

Other additives suitable for use in subterranean cementing operations also may be added to the cement compositions. Examples of such additives include, strength-retrogression additives, set accelerators, weighting agents, weight-reducing additives, heavyweight additives, lost-circulation materials, filtration-control additives, dispersants, defoaming agents, foaming agents, and combinations thereof. Specific examples of these, and other, additives include crystalline silica, amorphous silica, salts, fibers, hydratable clays, vitrified shale, microspheres, fly ash, lime, latex, thixotropic additives, combinations thereof and the like. A person having ordinary skill in the art, with the benefit of this disclosure, will readily be able to determine the type and amount of additive useful for a particular application and desired result.

As will be appreciated by those of ordinary skill in the art, the cement compositions may be used in a variety of subterranean applications, including primary and remedial cementing. The cement compositions may be introduced into a subterranean formation and allowed to set therein. The cement compositions may comprise cement, water and the particulate nano-silica. By way of example, in primary cementing, a cement composition may be introduced into a space between a subterranean formation and a pipe string located in the subterranean formation. The cement composition may be allowed to set to form a hardened mass in the space between the subterranean formation and the pipe string. In addition, in remedial cementing, a cement composition may be used, for example, in squeeze-cementing operations or in the placement of cement plugs. One or more hydrocarbons (e.g., oil, gas, etc.) may be produced from a well bore penetrating the subterranean formation.

While the preceding discussion is directed to the use of particulate nano-silica, those of ordinary skill in the art will also appreciate that it may be desirable to utilize other types of nano-particles. Examples of such nano-particles include nano-alumina, nano-zinc oxide, nano-boron, nano-iron oxide and combinations thereof. The nano-particles may be particulate in nature and not, for example, a colloidal nano-particle or a suspension of the nano-particle in solution. Furthermore, while the preceding discussion is directed to the use of particulate nano-silica in well cementing methods, those of ordinary skill in the art will appreciate that the present technique also encompasses the use of nano-particles in any of a variety of different subterranean treatments. As such, all definitions of the nano-particulates (e.g. nano-silica) described in reference to cement compositions in this document apply equally to nano-particulates when used in treatment fluids (for example, fracturing fluids), and vice versa. The nano-particles (for example, nano silica) may be included in any of a number of well treatment fluids that may be used in subterranean treatments, including drilling fluids, completion fluids, stimulation fluids, fracturing fluids and well clean-up fluids. The nano-particles may be included as proppant in a well treatment fluid. For example, a well treatment fluid containing the nano-particles may be introduced into a subterranean formation at or above a pressure sufficient to create or enhance one or more fractures in the subterranean formation. Enhancing a fracture includes enlarging a pre-existing fracture in the formation. At least a portion of the nano-particles may be deposited in the one or more fractures such that the fractures are prevented from fully closing upon the release of pressure, forming conductive channels through which fluids may flow to (or from) the well bore.

With regard to fracturing fluids, these fluids are commonly viscosified, gelled and/or crosslinked. The function of the fracturing fluid is used to apply pressure to the formation rocks around the well, up to a pressure whereby the formation is fractured. One essential function of these fluids is to be capable of suspending a proppant and especially to carry this proppant without settling into the fracture created by the fluid. Once again the rheology, especially the so called "suspension" property, and the stability of these fluids is of first importance, as well as the property of fluid loss control.

In addition to the use of the nano-particles without encapsulation, embodiments may include encapsulation of the nano-particles to facilitate transportation and incorporation of the nano-particles in well treatment fluids (e.g., cement compositions, fracturing fluids). Specifically, encapsulation of the nano-particles may include enclosing the nano-particles within an outer coating or container in particulate form. Exemplary methods of encapsulation are set forth in U.S. Patent Nos. 5,373,901; 6,444,316; 6,527,051; 6,554,071; 7,156,174; and 7,204,312.

Various types of encapsulation may be employed such that the nano-particles (e.g., the particulate nano-silica) are contained but retains its particulate nature and, thus, retains its corresponding impact on physical properties of cement slurries/fracturing fluids. For example, the nano-particles may be encapsulated within a bag, capsule, layer, coating or the like. Further, the material utilized to encapsulate the nano-particles may be selected to facilitate transportation and/or incorporation of the nano-particles into a well treatment fluid, such as a fracturing fluid. For example, to facilitate handling of the nano-particles and/or to facilitate timed release of the nano-particles, the encapsulation material may be degradable. This may facilitate handling of the nano-particles by allowing inclusion of the encapsulated nano-particles in a well treatment fluid without requiring that the nano-particles first be removed from the encapsulating material. Further, the encapsulating material may be designed to degrade at a certain rate when in contact with certain materials (e.g., water) so that the nano-particles are released into the well treatment fluid at a desired time. Exemplary water-dissolvable materials that may be utilized to encapsulate the nano-particles are described in U.S. Patent Nos. 4,961,790 and 5,783,541.

Cement compositions may utilize a packing volume fraction suitable for a particular application as desired. As used herein, the term "packing volume fraction" refers to the volume of the particulate materials in a fluid divided by the total volume of the fluid. The size ranges of the preferred particulate materials are selected, as well as their respective proportions, in order to provide a maximized packing volume fraction so that the fluid is in a hindered settling state. It is known that, in such a state, the particulate materials behave "collectively" like a porous solid material. The hindered settling state is believed to correspond, in practice, to a much higher solid material concentration in the fluid than that present in the some traditional cement compositions.

The cement compositions may include a combination of at least three features to obtain a maximum packing volume fraction. One is the use of at least three particulate materials wherein at least three particulate materials are in size ranges "disjointed" from one another. Each of the three particulate materials may include a different particle size selected from the following ranges: about 7 nm to about 50 nm, about 0.05 microns to about 0.5 microns, 0.5 microns to about 10 microns, about 10 microns to about 20 microns, about 20 microns to about 200 microns, about 200 microns to about 800 microns, and greater than about 1 millimeter. For example, a first particulate material may include particles sized from about 7 nm to about 50 nm, a second particulate material may include particles sized from about 0.05 microns to about 0.5 microns, and a third particulate material may include particles sized from about 10 microns to about 20 microns. The first particulate material can include at least one of nano-silica, nano-alumina, nano-zinc oxide, nano-boron, nano-iron oxide or combinations thereof. Also, it may include a choice of the proportions of the three particulate materials in relation to the mixing, such that the fluid, when mixed, is in a hindered settling state. Another feature may include the choice of the proportions of the three particulate materials between each other, and according to their respective size ranges, such that the maximum packing volume fraction is at least substantially achieved for the sum total of all particulate materials in the fluid system. Packing volume fraction is described in further detail in United States Patent Nos. 5,518,996 and 7,213,646.

Systems configured for delivering the treatment fluids described herein to a downhole location are described. The systems can comprise a pump fluidly coupled to a tubular, the tubular containing a treatment fluid comprising a proppant comprising nano-particulates.

The pump may be a high pressure pump. As used herein, the term "high pressure pump" will refer to a pump that is capable of delivering a fluid downhole at a pressure of about 1000 psi or greater. A high pressure pump may be used when it is desired to introduce the treatment fluid to a subterranean formation at or above a fracture gradient of the subterranean formation, but it may also be used in cases where fracturing is not desired. The high pressure pump may be capable of fluidly conveying particulate matter, such as proppant particulates, into the subterranean formation. Suitable high pressure pumps will be known to one having ordinary skill in the art and may include, but are not limited to, floating piston pumps and positive displacement pumps.

Alternatively, the pump may be a low pressure pump. As used herein, the term "low pressure pump" will refer to a pump that operates at a pressure of about 1000 psi or less. A low pressure pump may be fluidly coupled to a high pressure pump that is fluidly coupled to the tubular. That is, the low pressure pump may be configured to convey the treatment fluid to the high pressure pump. In such a way, the low pressure pump may "step up" the pressure of the treatment fluid before it reaches the high pressure pump.

The systems described herein can further comprise a mixing tank that is upstream of the pump and in which the treatment fluids is formulated. The pump (e.g., a low pressure pump, a high pressure pump, or a combination thereof) may convey the treatment fluid from the mixing tank or other source of the treatment fluid to the tubular. Alternatively, however, the treatment fluid can be formulated offsite and transported to a worksite, in which case the treatment fluid may be introduced to the tubular via the pump directly from its shipping container (*e.g.,* a truck, a railcar, a barge, or the like) or from a transport pipeline. In either case, the treatment fluid may be drawn into the pump, elevated to an appropriate pressure, and then introduced into the tubular for delivery downhole.

The FIGURE shows an illustrative schematic of a system that can deliver treatment fluids of the present invention, for example a fracturing fluid, to a downhole location. It should be noted that while the FIGURE generally depicts a land-based system, it is to be recognized that like systems may be operated in subsea locations as well. As depicted in the FIGURE, system 1 may include mixing tank 10, in which a treatment fluid of the present invention may be formulated. The treatment fluid may be conveyed via line 12 to wellhead 14, where the treatment fluid enters tubular 16, tubular 16 extending from wellhead 14 into subterranean formation 18. Upon being ejected from tubular 16, the treatment fluid may subsequently penetrate into subterranean formation 18. Pump 20 may be configured to raise the pressure of the treatment fluid to a desired degree before its introduction into tubular 16. It is to be recognized that system 1 is merely exemplary in nature and various additional components may be present that have not necessarily been depicted in the FIGURE in the interest of clarity. Non-limiting additional components that may be present include, but are not limited to, supply hoppers, valves, condensers, adapters, joints, gauges, sensors, compressors, pressure controllers, pressure sensors, flow rate controllers, flow rate sensors, temperature sensors, and the like.

Although not depicted in the FIGURE, the treatment fluid may, in some embodiments, flow back to wellhead 14 and exit subterranean formation 18. The treatment fluid that has flowed back to wellhead 14 may subsequently be recovered and recirculated to subterranean formation 18.

It is also to be recognized that the disclosed treatment fluids may also directly or indirectly affect the various downhole equipment and tools that may come into contact with the treatment fluids during operation. Such equipment and tools may include, but are not limited to, wellbore casing, wellbore liner, completion string, insert strings, drill string, coiled tubing, slickline, wireline, drill pipe, drill collars, mud motors, downhole motors and/or pumps, surface-mounted motors and/or pumps, centralizers, turbolizers, scratchers, floats (*e.g.,* shoes, collars, valves, etc.), logging tools and related telemetry equipment, actuators (*e.g.,* electromechanical devices, hydromechanical devices, etc.), sliding sleeves, production sleeves, plugs, screens, filters, flow control devices (*e.g.,* inflow control devices, autonomous inflow control devices, outflow control devices, etc.), couplings (*e.g.,* electro-hydraulic wet connect, dry connect, inductive coupler, etc.), control lines (*e.g.,* electrical, fiber optic, hydraulic, etc.), surveillance lines, drill bits and reamers, sensors or distributed sensors, downhole heat exchangers, valves and corresponding actuation devices, tool seals, packers, cement plugs, bridge plugs, and other wellbore isolation devices, or components, and the like. Any of these components may be included in the systems generally described above and depicted in the FIGURE.

To facilitate a better understanding of the present technique, the following examples of some specific embodiments are given. In no way should the following examples be read to limit, or to define, the scope of the invention.

### EXAMPLE 1

Five different cement slurries (i.e., Slurry A, Slurry B, Slurry C, Slurry D and Slurry E) were prepared. The slurries and resulting set cements were then tested to determine setting or thickening times and other physical properties of each of the five different slurries. As set forth below, the respective test results for the five different slurries demonstrate that inclusion of particulate nano-silica in the slurry reduces the set time and increases the strength of the resulting cement relative to cements resulting from inclusion of the other silica components that were tested.

Slurries A, B, C and D were prepared by dry blending dry components with cement prior to adding water to form the respective slurry. Slurry E was prepared by dry blending dry components with cement prior to adding water and then adding colloidal silica to form the respective slurry. Further, each of the five slurries included a different type of silica. Two of the five slurries included particulate nano-silica, and the other three included silica in different forms and sizes (e.g., colloidal silica and micro-silica). While the silica included in each of the five slurries was different, the other components utilized in each of the five slurries were similar. Specifically, in addition to a specific type of silica, each of the five slurries included 100% bwoc of Class G cement, 0.5% bwoc of a retarder, and sufficient water to make the density of the slurry approximately 12.00 lbs/gal. The specific retarder utilized in the slurries was HR-5 cement retarder, which is a sulfomethylated lignosulfonate. It should be noted that HR5 cement retarder is available from Halliburton Energy Services, Inc. and is described in U.S. Patent No. RE31,190.

As set forth above, each of the five slurries included a different type of silica and sufficient water to make the resulting slurry have a density of 12.00 ppg. Slurries A and B included particulate nano-silica and 15.36 gal/sk of water. Specifically, Slurry A included 15% bwoc of particulate nano-silica having a particle size of approximately 30 nm, and Slurry B included particulate nano-silica having a particle size of approximately 10 nm. Slurry C included 15% bwoc of SILICALITE cement additive and 15.68 gal/sk of water. SILICALITE (compacted) cement additive, which is available from Halliburton Energy Services, Inc., Duncan, Oklahoma, is an amorphous silica generally sized in a range from about 2.5 microns to about 50 microns. Slurry D included 15% bwoc of MICROSAND cement additive and 15.77 gal/sk of water. MICROSAND cement additive, which is available from Halliburton Energy Services, Inc., Duncan, Oklahoma, is a crystalline silica ground to a substantially uniform particle size distribution of approximately 5 to 10 microns. Slurry E included 5.12 gat/sk of GasCon 469™ lightweight cement additive and 10.09 gal/sk of water. GASCON 469 lightweight cement additive is available from Halliburton Energy Services, Inc., Duncan, Oklahoma, and may be defined as a colloidal silicic acid suspension containing suspended silicic acid particles generally having a particle size of less than about 20 nm.

After the five slurries were prepared, tests were performed to determine various physical characteristics associated with inclusion of the different silica components in each of the associated cement compositions. One of these tests was performed to measure a thickening time associated with each of the five slurries. Specifically, the total thickening time (TTT) associated with each cement slurry was determined by performing a thickening-time test in accordance with API Recommended Practice 10, *API Specification for Materials and Testing for Well Cements*. The measurement of the TTT for each slurry was based on the respective slurry reaching a consistency of 70 Bearden units (Bc) at 80 °F. The results of these measurements are set forth for each of the five slurries in Table 1 below.

Additional tests were performed on the cement slurries to determine force-resistance properties (e.g., compressive strength, shear-bond strength, and tensile strength) for each of the slurries. Each of the force-resistance property tests was performed on the respective cement slurries at a temperature of 80°F and after the slurries had set for 72 hours. The force-resistance property tests included nondestructive and destructive ultrasonic strength tests, a compressive-strength test, a shear-bond test, and a tensile-strength test. The nondestructive and destructive ultrasonic analyzer tests were conducted using a UCA ultrasonic cement analyzer to determine a UCA_{72 hrs} value and a UCA_{crush} value, respectively. The compressive-strength tests and UCA analyzer tests were performed in accordance with API Recommended Practice 10B. Further, shear-bond and Brazilian-tensile-strength tests were performed to determine shear strength and tensile strength values, respectively, for the different cement compositions. The shear-bond-strength tests were performed as described in SPE 764 entitled "A Study of Cement - Pipe Bonding" by L.G. Carter and G.W. Evans. The Brazilian-tensile-strength tests were performed in accordance with ASTM C496-96. The results of the tests performed on each of the five compositions are shown in Table 1 below.

**TABLE 1**

| **Slurry** | **Silica Type** | **TTT to 70 Bec (Hr:Min)** | **UCA_{72 hrs} (psi)** | **UCA_{crush} (psi)** | **Comp. Strength (psi)** | **Shear-Bond Strength (psi)** | **Brazilian Tensile Strength (psi)** |
|---|---|---|---|---|---|---|---|
| Slurry A | 30 nm particulate nano-silica | 2:43 | 328 | 419 | 428 | 169 | 148.28 |
| Slurry B | 10 nm particulate nano-silica | 5:00 | 500 | 481 | 402 | 51 | 14.72 |
| Slurry C | Amorphous silica | 14:32 | 266 | 206 | 211 | 98 | 95.5 |
| Slurry D | Crystalline Silica | 20:00+ | 260 | 285 | 252 | 37.2 | 102.16 |
| Slurry E | Colloidal Silica | 20:00+ | 225 | 219 | 374 | 42.4 | 84.71 |

### EXAMPLE 2

Samples of Slurries A, C, D and E discussed above were also tested to determine various additional physical properties associated with the resulting set cements and to confirm relative differences demonstrated above. While different instruments and calibration settings were used in the additional testing of the slurries, the test data indicates that relative differences between the different slurries are similar to those differences illustrated in Example 1. Indeed, as indicated above in Example 1, the respective test results in Example 2 for the five different cements demonstrate that inclusion of particulate nano-silica in the cement composition increases the strength of the resulting cement relative to cements resulting from inclusion of the other silica components that were tested.

Three samples for each of the three conventional cement slurries (Slurry C, Slurry D, and Slurry E) and four samples of Slurry A were tested to determine compressive strength, Young's modulus, and Poisson's ratio. The compressive-strength tests were performed in accordance with API Specification 10. It should be noted that the compressive-strength measurements in Example 1 are different than those in Example 2 because different equipment and different calibrations were utilized. However, the relative differences between compressive strengths for each of the five slurries are similar. The Young's modulus and Poisson's ratio were statically determined by means of compression testing using a load frame. The Young's modulus or modulus of elasticity for each sample was obtained by taking a ratio of a simple tension stress applied to each sample to a resulting strain parallel to the tension in that sample. The Poisson's ratio for each sample was determined by calculating a ratio of transverse strain to a corresponding axial strain resulting from uniformly distributed axial stress below a proportional limit of each sample. The values determined for the three samples of each of the five different cement slurries are set forth below in Table 2.

**TABLE 2**

| **Slurry** | **Sample** | **Silica Type** | **Compressive Strength (psi)** | **Young's Modulus** | **Poisson's Ratio** |
|---|---|---|---|---|---|
| Slurry A | Sample 1 | 30 nm particulate nano-silica | 1257 | 2.26E+05 | ** |
| Slurry A | Sample 2 | 30 nm particulate nano-silica | 1189 | 2.12E+05 | 0.109 |
| Slurry A | Sample 3 | 30 nm particulate nano-silica | 1249 | 2.04E+05 | 0.092 |
| Slurry A | Sample 4 | 30 nm particulate nano-silica | 1275 | 2.13E+05 | 0.110 |
| Slurry C | Sample 1 | Amorphous silica | 466 | 2.53E+05 | 0.064 |
| Slurry C | Sample 2 | Amorphous silica | 483 | 2.38E+05 | 0.064 |
| Slurry C | Sample 3 | Amorphous silica | 506 | 2.40E+05 | 0.053 |
| Slurry D | Sample 1 | Crystalline Silica | 350 | 1.42E+05 | 0.068 |
| Slurry D | Sample 2 | Crystalline Silica | 397 | 1.50E+05 | 0.063 |
| Slurry D | Sample 3 | Crystalline Silica | 378 | 1.46E+05 | 0.060 |
| Slurry E | Sample 1 | Colloidal Silica | 514 | 1.03E+05 | 0.063 |
| Slurry E | Sample 2 | Colloidal Silica | 598 | 1.15E+05 | 0.072 |
| Slurry E | Sample 3 | Colloidal Silica | 627 | 1.23E+05 | 0.071 |

The particular embodiments disclosed above are illustrative only, as the example embodiments may be susceptible to various modifications and alternative forms. However, it should be understood that the embodiments are not intended to be limited to the particular embodiments disclosed. Rather, the embodiments cover all modifications, equivalents and alternatives falling with the scope of the present invention as defined by the following appended claims. In addition, every range of values (of the form, "from about a to about b," or, equivalently, "from approximately a to b," or, equivalently, "from approximately a-b") disclosed in the present Description of Specific Embodiments is to be understood as referring to the power set (the set of all subsets) of the respective range of values, and set for the every range encompassed within the broader range of value.

In addition to the subject matter above and that of the appended claims, the following list of additional features may serve as basis for claims in this application or subsequent divisional applications.

### Aspect 1

A method of treating a subterranean formation comprising: introducing into the subterranean formation a treatment fluid at or above a pressure sufficient to create or enhance one or more fractures in the subterranean formation wherein at least a portion of the treatment fluid contains a proppant comprising nano-particulates; and depositing at least a portion of the nano-particulates in the one or more fractures, wherein the fractures are prevented from fully closing upon the release of pressure.

### Aspect 2

A method of treating a subterranean formation comprising: introducing into the subterranean formation a treatment fluid comprising particulate materials, the particulate materials comprising a particulate having a particle size of less than or equal to about 100 nm; and determining a packing volume fraction for the particulate materials in the treatment fluid.

### Aspect 3

A cement composition comprising cement, water and nano-particulates.

### Aspect 4

A fracturing fluid comprising a nano-sized proppant.

In any one of aspects 1 to 3, the nano-particulates may comprise nano-silica. Additionally or alternatively, the nano-particulates may comprise a particulate nano-silica. Additionally or alternatively, the nano-particulates may have a particle size of less than or equal to about 100 nm. Additionally or alternatively, the nano-particulates may have a particle size in the range of from about 1 nm to about 100 nm. Additionally or alternatively, the nano-particulates may be coated. Additionally or alternatively, the nano-particulates may be selected from the group consisting of nano-aluminum, nano-zinc oxide, nano-boron, nano-iron oxide and combinations thereof.

In aspects 1 or 2, the method further comprises producing one or more hydrocarbons from a well bore penetrating the subterranean formation.

In any one of aspects 1, 2 or 4, the treatment fluid (which can be a fracturing fluid) comprises at least one member selected from the group consisting of a gelling agent and a crosslinking agent.

In aspect 4 and in aspect 1 (when the proppant is nano-sized) the nano-sized proppant may prevent fractures in a subterranean formation from fully closing upon the release of pressure therefrom. Additionally or alternatively, the nano-sized proppant may have a particle size of less than or equal to about 100 nm. Additionally or alternatively, the nano-sized proppant may have a particle size in the range of from about 1 nm to about 100 nm. Additionally or alternatively, the nano-sized proppant may be coated. Additionally or alternatively, the nano-sized proppant may comprise nano-silica. Additionally or alternatively, the nano-sized proppant may comprise a particulate nano-silica. Additionally or alternatively, the nano-sized proppant may be selected from the group consisting of nano-aluminum, nano-zinc oxide, nano-boron, nano-iron oxide and combinations thereof

In aspect 1, the fractures may form conductive channels through which fluids may flow. Additionally or alternatively, the proppant may comprise a particulate blend of at least particles less than 0.5 microns and particulates greater than 1 millimeter.

In aspect 3, the nano-particulates may comprise nano-silica. Additionally or alternatively, the nano-particulates may comprise a particulate nano-silica. Additionally or alternatively, the nano-particulates may have a particle size of less than or equal to about 100 nm. Additionally or alternatively, the nano-particulates may have a particle size in the range of from about 1 nm to about 100 nm. Additionally or alternatively, the particulate nano-silica may have a particle size of less than or equal to about 50 nm. Additionally or alternatively, the particulate nano-silica may have a particle size in the range of from about 5 nm to about 50 nm. Additionally or alternatively, the particulate nano-silica may have a particle size of less than or equal to about 30 nm. Additionally or alternatively, the particulate nano-silica may have a particle size in the range of from about 5 nm to about 30 nm. Additionally or alternatively, the nano-particulates may be coated. Additionally or alternatively, the water may be freshwater. Additionally or alternatively, the water may be present in the cement compositions in an amount in the range of from about 33% to about 200% by weight of the cement on a dry basis ("bwoc"). Additionally or alternatively, the water may be present in an amount in the range of from about 35% to about 70% bwoc. Additionally or alternatively, the cement composition further comprises a set retarder.

## Claims

1. A method of treating a subterranean formation comprising:
introducing into the subterranean formation a treatment fluid at or above a pressure sufficient to create or enhance one or more fractures in the subterranean formation wherein at least a portion of the treatment fluid contains a proppant comprising nano-particulates; and
depositing at least a portion of the nano-particulates in the one or more fractures, wherein the fractures are prevented from fully closing upon the release of pressure.

2. The method according to claim 1, wherein the nano-particulates are selected from the group consisting of nano-silica, nano-aluminum, nano-zinc oxide, nano-boron, nano-iron oxide and combinations thereof.

3. The method according to claim 1 or 2, wherein the nano-particulates comprise nano-silica.

4. The method according to any preceding claim, wherein the nano-particulates comprise a particulate nano-silica.

5. The method according to any preceding claim, wherein the proppant comprises a particulate blend of at least particles less than 0.5 microns and particulates greater than 1 millimeter.

6. The method according to any preceding claim, wherein the nano-particulates have a particle size in the range of from about 1 nm to about 100 nm.

7. The method according to any preceding claim, further comprising producing one or more hydrocarbons from a well bore penetrating the subterranean formation.

8. The method according to any preceding claim, wherein the treatment fluid comprises at least one member selected from the group consisting of a gelling agent and a crosslinking agent.

9. A fracturing fluid comprising a nano-sized proppant.

10. The fracturing fluid according to claim 9,wherein the nano-sized proppant has a particle size in the range of from about 1 nm to about 100 nm.

11. The fracturing fluid according to claim 9 or 10, wherein the nano-sized proppant is coated.

12. The fracturing fluid according to any one of claims 9 to 11, wherein the nano-sized proppant is selected from the group consisting of nano-silica, nano-aluminum, nano-zinc oxide, nano-boron, nano-iron oxide and combinations thereof.

13. The fracturing fluid according to any one of claims 9 to 12, wherein the nano-sized proppant comprises nano-silica.

14. The fracturing fluid according to any one of claims 9 to 13, wherein the nano-sized proppant comprises a particulate nano-silica.

15. The fracturing fluid according to any one of claims 9 to 14, wherein the fracturing fluid comprises at least one member selected from the group consisting of a gelling agent and a cross linking agent.
